(19) Europäisches Patentamt
European Patent Office
Office européen des brevets

(11) **EP 2 254 219 A1**

(12) **EUROPEAN PATENT APPLICATION**
published in accordance with Art. 153(4) EPC

(43) Date of publication:
**24.11.2010 Bulletin 2010/47**

(51) Int Cl.:
*H02J 7/02* (2006.01)    *B60L 3/00* (2006.01)
*H01M 10/44* (2006.01)    *H01M 10/48* (2006.01)

(21) Application number: **09720820.1**

(22) Date of filing: **10.03.2009**

(86) International application number:
**PCT/JP2009/054528**

(87) International publication number:
**WO 2009/113530 (17.09.2009 Gazette 2009/38)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **11.03.2008   JP 2008060938**

(71) Applicant: SANYO Electric Co., Ltd.
**Moriguchi-shi
Osaka 570-8677 (JP)**

(72) Inventors:
• KIRIMOTO, Mika
  **Moriguchi-shi
  Osaka 570-8677 (JP)**
• MURAO, Hiroya
  **Moriguchi-shi
  Osaka 570-8677 (JP)**

(74) Representative: **Roberts, Peter David et al
Marks & Clerk LLP
Sussex House
83-85 Mosley Street
Manchester
M2 3LG (GB)**

(54)  **CHARGE STATE EQUALIZING DEVICE AND ASSEMBLED BATTERY SYSTEM PROVIDED WITH SAME**

(57)   A device that equalizes state of charge of each of a plurality of cells 1 connected in series which form an assembled battery includes a control circuit 20 and a discharge circuit 21 for discharging each cell 1. The control circuit 20 includes means that derives, for each cell to be discharged having a state of charge evaluation value different from an equalization target value, a discharge time or discharge end value with which the state of charge of a cell to be discharged becomes equal to that of a cell not to be discharged, based on the state of charge evaluation values of the cell to be discharged and the cell not to be discharged before the discharge by the discharge circuit 21 is started, a state of charge evaluation value changing speed during discharge of a cell, and a state of charge evaluation value changing speed during no discharge of a cell, and means that starts the discharge by the discharge circuit 21 for the cell to be discharged, and thereafter ends the discharge by the discharge circuit 21 for each cell to be discharged when the derived discharge time has elapsed or when the state of charge evaluation value reaches the derived discharge end value.

FIG. 1

EP 2 254 219 A1

**Description**

TECHNICAL FIELD

The present invention relates to a device for equalizing state of charge of a plurality of cells that form an assembled battery, and an assembled battery system comprising the device.

BACKGROUND ART

In recent years, an assembled battery has been widely used. For example, an assembled battery including a plurality of lithium-ion secondary cells connected in series is used in a hybrid vehicle as a power source. Discharge power of an assembled battery is limited by a cell with the lowest state of charge (SOC) among a plurality of cells that forms the assembled battery. Therefore, performance of an assembled battery decreases due to the variation of SOC of the plurality of cells that form the assembled battery.

Accordingly, required is an equalization process for decreasing variation of the SOCs of the plurality of cells of the assembled battery to be within a certain range (e.g. Japan Patent Laid-Open No. 2001-218376 and Japan Patent Laid-Open No. 2001-231178).

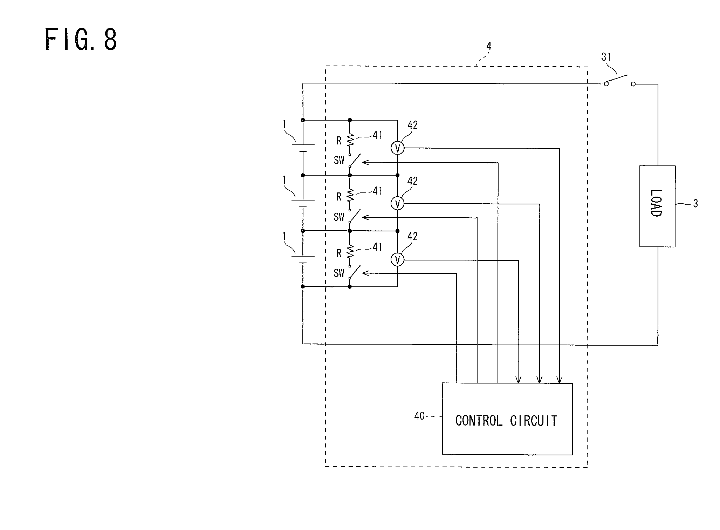

FIG. 8 shows a battery system of a conventional hybrid vehicle. This battery system comprises an assembled battery including a plurality of cells 1 connected in series and a state of charge equalizing device 4 for equalizing state of charge of the assembled battery, and electric power can be supplied from the assembled battery to a load 3. As the load 3, connected is a motor for driving wheels of a hybrid vehicle, a control circuit for controlling a whole vehicle or the like.

An open/close switch 31 intervenes in a power supply path from the assembled battery to the load 3. The open/close switch 31 is closed by a user's operation for turning on an ignition switch which is not shown to start electric power supply from the assembled battery to the load 3. Alternatively, the open/close switch 31 is opened by a user's operation for turning off the ignition switch to stop electric power supply from the assembled battery to the load 3.

A discharge circuit 41 comprising a resistor R and a switch SW which are connected in series to each other is connected to both ends of each of the cells 1 forming the assembled battery in parallel with each of the cells 1, and a voltage measurement circuit 42 for measuring a voltage at both ends (open-circuit voltage) of each of the cells 1 is connected to both ends of the discharge circuit 41.

Result of the measurement by each voltage measurement circuit 42 is supplied to a control circuit 40. The control circuit 40 calculates an equalization target voltage based on the result of the measurement by each voltage measurement circuit 42, and thereafter controls a switching operation of the switch SW of each discharge circuit 41 based on the calculated equalization target voltage and the result of the measurement by each voltage measurement circuit 42. The control circuit 40 performs control operation with electric power being supplied from the assembled battery.

In the equalization process by the control circuit 40, for example, a minimum voltage is identified among voltages at both ends of the plurality of cells 1 forming the assembled battery, and the equalization target voltage is calculated by adding a predetermined value to the minimum voltage. Then the discharge circuit 41 starts discharging a cell which has a voltage at both ends thereof exceeding the equalization target voltage, and thereafter stops discharging when the voltage at both ends of the cell reaches the equalization target voltage. The SOCs of the plurality of cells that form the assembled battery are thereby equalized.

In order to inhibit decrease in residual energy (SOC) due to prolonged voltage equalization operation to the assembled battery, proposed is a voltage equalization control system for performing the voltage equalization operation by a voltage balance circuit (state of charge equalizing device) only for a time period corresponding to difference between the maximum terminal voltage and the minimum terminal voltage of terminal voltages of a plurality of electric storage devices (Japan Patent Laid-Open No. 2006-166615).

DISCLOSURE OF THE INVENTION

PROBLEMS TO BE SOLVED BY THE INVENTION

Generally, equalization process of an assembled battery needs to be performed when the load is small. In a hybrid vehicle, equalization process of an assembled battery is performed in a stopped state (state where an ignition switch is off).

However, in a battery system of a hybrid vehicle, an assembled battery is used as both a power supply of the load 3 and a power supply of the control circuit 40 forming the state of charge equalizing device 4, and electric power is supplied to the control circuit 40 from the assembled battery even when the hybrid vehicle is in a stopped state. Therefore, a voltage at both ends of a cell gradually falls even in a state where discharge is not performed by the discharge circuit 41. Therefore, at the time when a voltage at both ends of a cell which is the highest when starting the equalization process reaches the equalization target voltage and the equalization process ends, a voltage at both ends of a cell for which the discharge by the discharge circuit 41 is not performed or ends earlier falls below the equalization target voltage as discussed below.

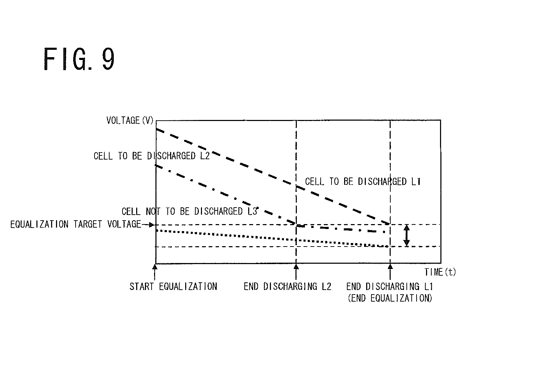

For example, as shown in FIG. 9, in a case where an assembled battery comprises three cells L1, L2 and L3 and cells L1 and L2 whose voltages at both ends thereof exceed the equalization target voltage are discharged by a discharge circuit, equalization process ends at the time when the voltage at both ends of the cell L1 which was the highest reaches the equalization target voltage. However, a voltage at both ends of the cell L2 gradually falls even after it reaches the equalization target voltage and the discharge circuit stops discharging, and falls below the equalization target voltage at the end of the equalization process.

As described above, in a conventional equalization process, a voltage at both ends of a cell for which discharge by the discharge circuit is not performed or ends earlier falls below the equalization target voltage at the end of the equalization process, which leads to a great variation of voltage at both ends of the plurality of cells, resulting in a problem of failing to obtain a high accuracy in the equalization process. Particularly, the problem is significant when power consumption in the stopped state is large or variation of voltage at both ends of the plurality of cells is great and it takes long time for the equalization process.

An object of the present invention is to provide a state of charge equalizing device which can perform an equalization process with higher accuracy than in conventional devices and an assembled battery system comprising the device.

MEANS FOR SOLVING THE PROBLEM

A state of charge equalizing device according to the present invention is a device for equalizing state of charge of a plurality of cells connected in series that form an assembled battery by discharging a cell having a state of charge evaluation value different from an equalization target value, the state of charge evaluation value represents state of charge or a value corresponding to the state of charge, and the device comprises:

discharging means that performs discharge of each of the cells;
equalization target value calculating means that calculates the equalization target value;
discharge control value deriving means that derives a discharge time for which the discharge by the discharging means should be performed or a discharge end value at which the discharge by the discharging means should be ended for each of one or a plurality of cells to be discharged having the state of charge evaluation value different from the equalization target value calculated by the equalization target value calculating means; and
equalization processing means that performs an equalization process of starting the discharge by the discharging means for the one or plurality of cells to be discharged, and thereafter ending the discharge by the discharging means for each cell to be discharged when the discharge time derived by the discharge control value deriving means has elapsed or when the state of charge evaluation value reaches the discharge end value derived by the discharge control value deriving means.

The discharge control value deriving means derives the discharge time or the discharge end value with which the state of charge of the cell to be discharged becomes equal to the state of charge of a cell not to be discharged, based on: the state of charge evaluation value of the cell to be discharged and the state of charge evaluation value of the cell not to be discharged before the discharge by the discharging means is started; a state of charge evaluation value changing speed during discharge which represents a speed of change in the state of charge evaluation value of a cell when the discharge by the discharging means is performed; and a state of charge evaluation value changing speed during no discharge which represents a speed of change in the state of charge evaluation value of a cell when the discharge by the discharging means is not performed.

In a particular configuration, the state of charge evaluation value is a voltage at both ends of a cell, the device comprises a voltage measuring means that measures the voltage at both ends of each of the cells that form the assembled battery, the discharge control value deriving means derives the discharge time or the discharge end value based on: the voltage at both ends of the cell to be discharged and the voltage at both ends of the cell not to be discharged which are measured by the voltage measuring means before the discharge by the discharging means is started; a voltage lowering speed during discharge representing a lowering speed of the voltage at both ends of a cell when the discharge by the discharging means is performed; and a voltage lowering speed during no discharge representing a lowering speed of the voltage at both ends of a cell when the discharge by the discharging means is not performed.

In the equalization process by the state of charge equalizing device described above, the discharge by the discharging means is performed for a cell having a voltage at both ends thereof exceeding the equalization target value.

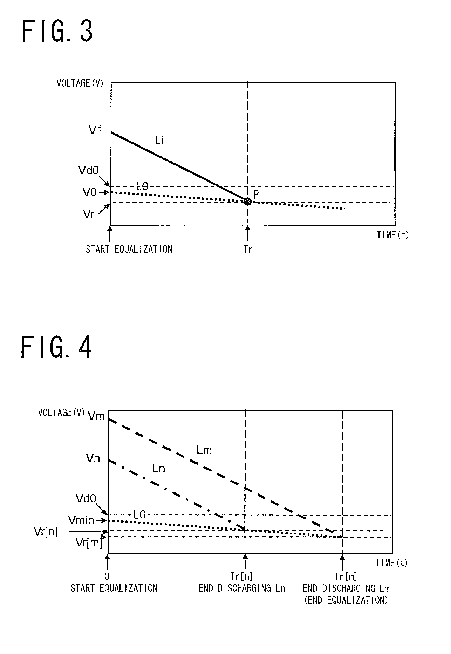

FIG. 3 shows change in a voltage at both ends of a cell to be discharged Li which is discharged by the discharging means and a voltage at both ends of a cell not to be discharged L0 which is not discharged by the discharging means in an equalization process. Here, Vd0 in the figure is the equalization target voltage. As shown in the figure, voltage at both ends of both the cell to be discharged Li and the cell not to be discharged L0 fall generally linearly, and a voltage lowering speed of the cell to be discharged Li is higher than that of the cell not to be discharged L0. Therefore, there is a point P where the voltage at both ends of the cell to be discharged Li becomes equal to that of the cell not to be discharged L0. Because the voltage at both ends of a cell changes in accordance with state of charge, the point P matches a point where the state of charge of the cell to be discharged becomes equal to that of the cell not to be discharged. Time Tr and voltage Vr at the point P can be calculated from a voltage V1 at both ends of the cell to be discharged and a voltage V0 at both ends of the cell not to be discharged before the discharge by the discharging means is started, and a difference between a voltage lowering speed during discharge of the cell when the discharge by the discharging means is performed and a voltage lowering speed during no discharge of the cell when the discharge by the discharging means is not performed.

Therefore, in the equalization process of the present invention, for each of one or a plurality of cells to be discharged having a voltage at both ends thereof exceeding the equalization target value, time or voltage at the point where the state of charge becomes equal to that of a cell not to be discharged is derived as the discharge time or the discharge end value. Here, the discharge time or the discharge end value is derived based on the voltage at both ends of the cell to be discharged and the voltage at both ends of the cell not to be discharged before the discharge by the discharging means is started, the voltage lowering speed during discharge, and the voltage lowering speed during no discharge as described above.

After the discharge time or the discharge end value is derived for each of the one or plurality of cells to be discharged having a voltage at both ends thereof exceeding the equalization target value in this way, the discharge by the discharging means of the cells to be discharged is started, and thereafter, the discharge by the discharging means of each of the cells to be discharged is stopped when the derived discharge time has elapsed or the voltage at both ends reaches the derived discharge end value. Therefore, the voltage at both ends of a cell to be discharged for which the discharge by the discharging means is the last to end becomes equal to the voltage at both ends of the cell not to be discharged at the time when the discharge ends to end the equalization process. Also, a voltage at both ends of a cell to be discharged for which the discharge by the discharging means ends earlier becomes equal to the voltage at both ends of the cell not to be discharged at the time when the discharge ends, and thereafter, gradually falls at the same speed as the cell not to be discharged. Thus, at the end of the equalization process, the voltages at both ends of the cells to be discharged become equal to the voltage at both ends of the cell not to be discharged, thereby obtained is higher accuracy of the equalization process compared to a conventional state of charge equalizing device in which a cell not to be discharged or a cell for which the discharge by a discharging circuit ends earlier has a voltage below the equalization target voltage.

In a particular configuration, the equalization target value calculating means calculates the equalization target value based on the lowest voltage among the voltage at both ends of the plurality of cells that forms the assembled battery.

According to the particular configuration described above, the number of cells not to be discharged having a voltage at both ends thereof can be one, or even if more than one, can be a small number. In the case where the number of cells not to be discharged is one, the voltages at both ends of cells to be discharged become equal to the voltage at both ends of the one cell not to be discharged, and therefore, voltages at both ends of all the cells that form the assembled battery can be even. Even in the case where the number of cells not to be discharged is more than one, because the number is small, variety of the voltage at both ends of the more than one cells not to be discharged is small, and therefore, variety among the plurality of cells that form the assembled battery can be small.

Further, in another particular configuration, in the discharge control value deriving means, a following function formula shown as a numerical formula 1 is set, where a voltage at both ends of a cell to be discharged before the discharge by the discharging means is started is V1, a voltage at both ends of a cell not to be discharged is V0, a voltage lowering speed during discharge is Ds1, a voltage lowering speed during no discharge is Ds0, and a discharge time for the cell to be discharged is Tr.

$$\text{(numerical formula 1)}$$
$$Tr = (V0 - V1)/(Ds0 - Ds1)$$

As mentioned above, the voltages at both ends of both the cell to be discharged and the cell not to be discharged fall generally linearly, and therefore, the discharge time for each cell to be discharged can be calculated using the numerical formula 1 accurately.

In a further particular configuration, the device includes:

discharge control means that performs the discharge by the discharging means for a certain time period for one or a plurality of cells which are a part of the plurality of cells that form the assembled battery; and state of charge evaluation value changing speed calculating means that calculates, after the discharge for a certain time period ends, the state of charge evaluation value changing speed during discharge based on state of charge evaluation values before start of the discharge and at the end of the discharge of the one or plurality of cells to be discharged for which the discharge is performed and the certain time period, and the state of charge evaluation value changing speed during no discharge based on state of charge evaluation values before start of the discharge and at the end of the discharge of one or a plurality of cells not to be discharged for which the discharge for a certain time period is not performed and the certain time period,

and the discharge control value deriving means derives the discharge time or the discharge end value for a subsequent equalization process using the state of charge evaluation value changing speed during discharge and the state of charge evaluation value changing speed during no discharge calculated by the state of charge evaluation value changing speed calculating means.

Because the state of charge evaluation value changing speed during discharge and the state of charge evaluation value changing speed during no discharge of a cell vary from one assembled battery system to another, the state of charge evaluation value changing speed during discharge and the state of charge evaluation value changing speed during no discharge need to be obtained for each assembled battery system. However, work for obtaining these state of charge evaluation value changing speeds by experiment is troublesome. Therefore, in the particular configuration described above, for example, before performing the equalization process, the discharge for a certain time period is performed for one or a plurality of cells which are a part of the plurality of cells that form the assembled battery to calculate the state of charge evaluation value changing speed during discharge and the state of charge evaluation value changing speed during no discharge, and thereafter, the discharge time or the discharge end value for each cell to be discharged is derived using the calculated state of charge evaluation value changing speed during discharge and state of charge evaluation value changing speed during no discharge.
According to the particular configuration described above, the state of charge evaluation value changing speed during discharge and the state of charge evaluation value changing speed during no discharge are automatically calculated, thereby eliminating the need for the troublesome work for obtaining these state of charge evaluation value changing speeds by experiment.
In a still further particular configuration, the device includes:

state of charge evaluation value changing speed storing means that stores the state of charge evaluation value changing speed during discharge and the state of charge evaluation value changing speed during no discharge;
second state of charge evaluation value changing speed calculating means that calculates, after the equalization process ends, the state of charge evaluation value changing speed during discharge based on state of charge evaluation values before start of the equalization process and at the end of the discharge by the discharging means of the one or plurality of cells to be discharged for which the discharge by the discharging means is performed in the equalization process and the discharge time derived by the discharge control value deriving means, and state of charge evaluation value changing speed during no discharge based on state of charge evaluation values before start of the equalization process and at the end of the equalization process of the one or plurality of cells not to be discharged for which the discharge by the discharging means is not performed in the equalization process and a time from the start to the end of the equalization process; and
updating means that updates the state of charge evaluation value changing speed during discharge and the state of charge evaluation value changing speed during no discharge which are stored in the state of charge evaluation value changing speed storing means to the state of charge evaluation value changing speed during discharge and the state of charge evaluation value changing speed during no discharge calculated by the second state of charge evaluation value changing speed calculating means, respectively,
and the discharge control value deriving means derives the discharge time for a subsequent equalization process using the updated state of charge evaluation value changing speed during discharge and state of charge evaluation value changing speed during no discharge.

The state of charge evaluation value changing speed during discharge and the state of charge evaluation value changing speed during no discharge change as the assembled battery deteriorates due to repeated usage of the assembled battery. Therefore, in the particular configuration described above, after the equalization process ends, the state of charge evaluation value changing speed during discharge and the state of charge evaluation value changing speed during no discharge are calculated, and the state of charge evaluation value changing speed during discharge and the state of charge evaluation value changing speed during no discharge which are stored in the state of charge evaluation value changing speed storing means are updated to the calculated state of charge evaluation value changing speed during discharge and state of charge evaluation value changing speed during no discharge respectively. Thereafter, when the equalization process is performed, the discharge time for each cell to be discharged is derived using the updated state of charge evaluation value changing speed during discharge and state of charge evaluation value changing speed during no discharge.
According to the particular configuration described above, because the discharge time is calculated always using values close to the actual state of charge evaluation value changing speed during discharge and state of charge evaluation value changing speed during no discharge, the equalization process can be always performed with high accuracy.
An assembled battery system of the present invention comprises an assembled battery comprising a plurality of cells connected in series and a state of charge equalizing device that equalizes state of charge of each of the cells of the assembled battery, and employs the state of charge equalizing device of the present invention described above as its state of charge equalizing device.

EFFECT OF THE INVENTION

With the state of charge equalizing device according to the present invention and the assembled battery system comprising the device, obtained is higher accuracy of an equalization process than in conventional devices.

BRIEF DESCRIPTION OF THE DRAWINGS

[FIG. 1] FIG. 1 is a block diagram showing a structure of a battery system in accordance with the present invention;
[FIG. 2] FIG. 2 is a flow chart showing an equalization process procedure performed in a battery system of a first embodiment;
[FIG. 3] FIG. 3 is a graph for explaining an equalization process of the present invention;
[FIG. 4] FIG. 4 is a graph showing change in a voltage at both ends of each cell in the equalization process of the present invention;
[FIG. 5] FIG. 5 is a flow chart showing a first half of an equalization process procedure performed when an ignition switch is turned off for the first time in a battery system of a second embodiment;
[FIG. 6] FIG. 6 is a flow chart showing a latter half of the above described procedure;
[FIG. 7] FIG. 7 is a flow chart showing an equalization process procedure performed when the ignition switch is turned off second and subsequent times in the battery system;
[FIG. 8] FIG. 8 is a block diagram showing a structure of a conventional battery system; and
[FIG. 9] FIG. 9 is a graph for explaining a conventional problem.

EXPLANATION OF REFERENCE NUMERALS

1    cell
2    state of charge equalizing device
21    discharge circuit
22    voltage measurement circuit
3    load
31    open/close switch

BEST MODE FOR CARRYING OUT THE INVENTION

An embodiment of the present invention in which the present invention is implemented in a battery system of a hybrid vehicle is to be described in detail below with reference to the drawings.

First Embodiment

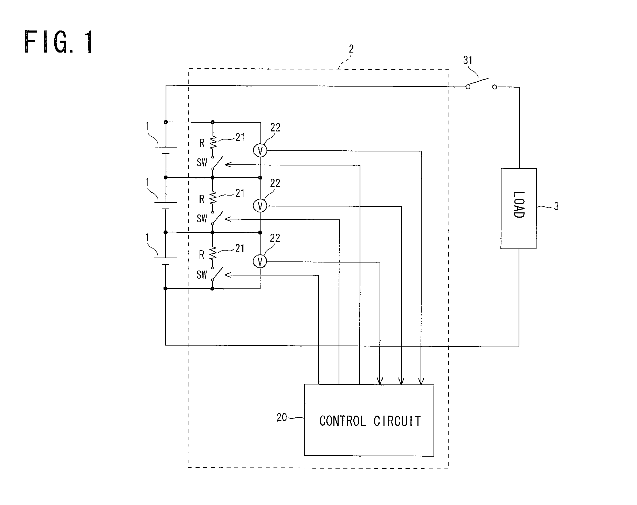

As shown in FIG. 1, a battery system according to this embodiment comprises an assembled battery that includes a plurality of cells 1 which are lithium-ion secondary cells and connected in series (three cells in the example of the drawing), and a state of charge equalizing device 2 for equalizing state of charge of the assembled battery. Electric power can be supplied to a load 3 from the assembled battery. As the load 3, connected is a motor for driving wheels of a hybrid vehicle, a control circuit for controlling a whole vehicle or the like.

An open/close switch 31 intervenes in a power supply path from the assembled battery to the load 3. The open/close switch 31 is closed by a user's operation for turning on an ignition switch which is not shown to start electric power supply from the assembled battery to the load 3. Alternatively, the open/close switch 31 is opened by a user's operation for turning off the ignition switch to stop the power supply from the assembled battery to the load 3.

A discharge circuit 21 comprising a resistor R and a switch SW which are connected in series to each other is connected to both ends of each of the cells 1 forming the assembled battery in parallel with each of the cells 1, and a voltage measurement circuit 22 for measuring voltage at both ends (open-circuit voltage) of each of the cells is connected to both ends of the discharge circuit 21. Result of the measurement by each voltage measurement circuit 22 is supplied to a control circuit 20. The control circuit 20 calculates an equalization target voltage based on the result of the measurement, and calculates a discharge time for which discharge by the discharge circuit 21 is performed as described later for each cell to be discharged having a voltage exceeding the equalization target voltage. The control circuit 20 controls switching operation of the switch SW of the discharge circuit 21 based on the calculated discharge time and counting result by a built-in timer (not shown). The control circuit 20 performs control operation with electric power being supplied from the assembled battery.

FIG. 3 shows change in a voltage at both ends of a cell to be discharged Li which is discharged by a discharge circuit and a voltage at both ends of a cell not to be discharged L0 which is not discharged by a discharge circuit in an equalization process. Here, Vd0 in the figure is the equalization target voltage. As shown in the figure, voltages at both ends of both the cell to be discharged Li and the cell not to be discharged L0 fall generally linearly, and voltage lowering speed (lowering speed of voltage) of the cell to be discharged Li is higher than that of the cell not to be discharged L0. Therefore, there is a point P where the voltage at both ends of the cell to be discharged Li becomes equal to that of the cell not to be discharged L0. Because the voltage at both ends of a cell changes in accordance with state of charge, the point P matches a point where the state of charge of the cell to be discharged becomes equal to that of the cell not to be discharged.

In the state of charge equalizing device according to the present invention described above, time of the above described point is calculated as the discharge time for each of one or a plurality of cells to be discharged which have voltages at both ends thereof exceeding the equalization target voltage. After discharge by the discharge circuit is started for the one or plurality of cells to be discharged, it is stopped when the calculated discharge time has elapsed.

The discharge time for each cell to be discharged can be obtained as follows.

A voltage $Vr$ at both ends of the cell to be discharged $Li$ at the end of discharge by the discharge circuit can be represented by following numerical formula 2, where the voltage at both ends of the cell to be discharged $Li$ before starting equalization is $V1$, voltage lowering speed of the cell when discharged by the discharge circuit is $Ds1$, and the discharge time by the discharge circuit is $Tr$.

$$\text{(numerical formula 2)}$$
$$Vr=V1-Ds1\cdot Tr$$

In contrast, a voltage $Vr0$ at both ends of the cell not to be discharged $L0$ at the time when the discharge time $Tr$ has elapsed after start of the equalization, i.e. at the end of discharge of the cell to be discharged $Li$ by the discharge circuit, can be represented by following numerical formula 3, where the voltage at both ends of the cell not to be discharged $L0$ before starting equalization is $V0$, and voltage lowering speed of the cell when not discharged by the discharge circuit is $Ds0$.

$$\text{(numerical formula 3)}$$
$$Vr0=V0-Ds0\cdot Tr$$

Therefore, the discharge time $Tr$ where the voltage $Vr$ at both ends of the cell to be discharged $Li$ becomes equal to the voltage $Vr0$ at both ends of the cell not to be discharged $L0$ can be obtained by following numerical formulas 2 and 3, where $Vr=Vr0$, and is represented by following numerical formula 4.

$$\text{(numerical formula 4)}$$
$$Tr=(V0-V1)/(Ds0-Ds1)$$

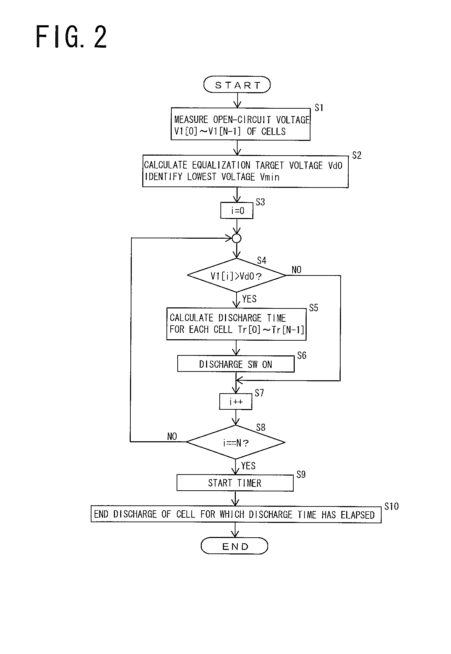

FIG. 2 shows an equalization process procedure performed by the control circuit 20 in a state where a hybrid vehicle is stopped. When an ignition switch is turned off, first in step S1, open-circuit voltages $V1[0]$ to $V1[N-1]$ of a plurality of (N) cells forming an assembled battery are measured, and subsequently in step S2, the lowest voltage $Vmin$ is identified from a plurality of open-circuit voltages obtained as a result of measurement, and an equalization target voltage $Vd0$ is calculated. In a process of calculation of the equalization target voltage, a predetermined value $\alpha$ is added to the identified lowest voltage $Vmin$ to calculate the equalization target voltage $Vd0$. Here the predetermined value $\alpha$ is set to a value equivalent to a measurement error of the voltage measurement circuit itself. The lowest voltage $Vmin$ to be identified is a value lower than the equalization target voltage $Vd0(=Vmin+\alpha)$, and therefore, is an open-circuit voltage of the cell not to be discharged.

Subsequently in step S3, a cell number $i$ is initialized to zero, and then in step S4, it is determined whether or not an open-circuit voltage $V1[i]$ of the cell with the cell number $i$ exceeds the equalization target voltage $Vd0$. If the answer is yes, the flow proceeds to step S5, and the discharge time $Tr[i]$ for the cell is calculated from the open-circuit voltage $V1[i]$ of the cell and the lowest voltage $Vmin$ identified in step S2 using a following numerical formula 5 stored in a built-in memory. Here, a voltage lowering speed during no discharge $Ds0$ and a voltage lowering speed during discharge $Ds1$ are preliminarily experimentally-obtained invariables. It is also possible to set a difference between the voltage lowering speed during no discharge $Ds0$ and the voltage lowering speed during discharge $Ds1$ as an invariable $Ds$.

$$\text{(numerical formula 5)}$$
$$Tr[i]=(Vmin-V1[i])/(Ds0-Ds1)$$

Subsequently in step S6, the switch of the discharge circuit connected to the cell is turned on to start discharging, and thereafter in step S7, the cell number $i$ is counted up by one. Next in step S8, it is determined whether or not the cell number $i$ matches the number $N$ of cells forming the assembled battery. If the answer is NO, the flow returns to step S4, and the above described procedure is repeated. In repetition of the procedure, if the open-circuit voltage $V1[i]$ of the cell is lower than or equal to the equalization target voltage $Vd0$ and thus the answer is NO in step S4, the flow proceeds to step S7, skipping steps S5 and S6.

Thereafter, when it has been determined whether or not the open-circuit voltage $V1[i]$ exceeds the equalization target voltage $Vd0$ for all cells forming the assembled battery, and the discharge time is calculated for all cells to be discharged whose open-circuit voltage $V1[i]$ exceeds the equalization target voltage $Vd0$ and discharge by the discharge circuit is started, it is determined YES in step S8. And then, the flow proceeds to step S9 to reset the built-in timer and start counting operation. Subsequently in step S10, discharge of each of the cells to be discharged which has been started by the discharge circuit is stopped by turning off the switch of the discharge circuit at the time when the discharge time calculated in step S5 has elapsed. When the longest discharge time calculated in step S5 has elapsed after the discharge circuit starts discharging, the above described equalization process procedure ends.

For example, as shown in FIG. 4, in a case where the assembled battery comprises three cells Lm, Ln and L0, the open-circuit voltage of the cell L0 is identified as the lowest voltage Vmin and discharge times Tr[m] and Tr[n] for the cells Lm and Ln which have voltages at both ends thereof exceeding the equalization target voltage Vd0 are calculated using the aforementioned numerical formula 5. After discharge of the cells Lm and Ln by the discharge circuit is started, discharge of the cell Ln stops at the time when the calculated discharge time Tr[n] has elapsed, and discharge of the cell Lm stops at the time when the calculated discharge time Tr[m] has elapsed. The voltage at both ends of the cell Lm thereby becomes equal to that of the cell Ln at the time when the discharge by the discharge circuit ends to end the equalization process. Also, voltage at both ends of the cell Ln becomes equal to that of the cell L0 at the time when the discharge by the discharge circuit ends, and thereafter gradually falls at the same speed as the cell L0. As a result, at the end of the equalization process, the voltage at both ends of the cells Lm and Ln which are cells to be discharged becomes equal to the voltage at both ends of the cell L0 which is a cell not to be discharged.

In the aforementioned case, the number of cells not to be discharged is one. In contrast, in a case where the number of cells not to be discharged is more than one, the voltage at both ends of the cell to be discharged becomes equal to that of a cell not to be discharged whose open-circuit voltage is the lowest among the more than one cells not to be discharged at the end of the equalization process. Also, in this embodiment, calculated is a discharge time after which the voltage at both ends of the cell to be discharged becomes equal to that of a cell not to be discharged whose open-circuit voltage is the lowest among the more than one cells not to be discharged. However, it is also possible to employ a structure in which calculated is a discharge time after which the voltage at both ends of the cell to be discharged becomes equal to a voltage at both ends of another cell not to be discharged.

In the battery system according to the present invention, as described above, by performing discharge by the discharge circuit for each cell to be discharged for a discharge time after which the voltage at both ends of the cell to be discharged becomes equal to that of the cell not to be discharged, the voltages at both ends of all the cells to be discharged can be equal to that of the cell not to be discharged at the end of the equalization process, and higher accuracy of equalization process than in conventional devices can be obtained.

Second Embodiment

In the battery system of the first embodiment, the voltage lowering speed during no discharge Ds0 and the voltage lowering speed during discharge Ds1 are preliminarily experimentally-obtained invariables. In contrast, in a battery system of this embodiment, the voltage lowering speed during no discharge Ds0 and the voltage lowering speed during discharge Ds1 are updated every time equalization process ends.

The structure of the battery system of this embodiment is the same as the battery system of the first embodiment shown in FIG. 1 except the control circuit, and therefore the description is omitted.

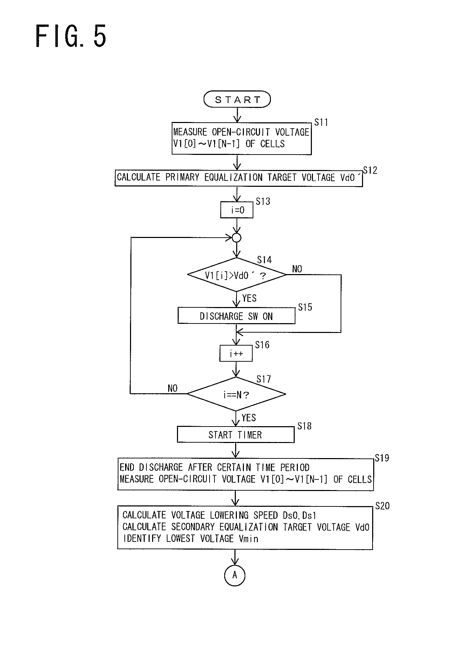

FIG. 5 shows an equalization process procedure which is performed by a control circuit of this embodiment when the ignition switch is turned off for the first time after a hybrid vehicle runs for the first time. First in step S11, open-circuit voltages V1[0] to V1[N-1] of a plurality of (N) cells forming an assembled battery are measured. Subsequently in step S12, a primary equalization target voltage Vd0'(=Vmin+α) is calculated. Here, calculation method of the primary equalization target voltage is the same as that of the equalization target voltage of the first embodiment.

Thereafter in step S13, a cell number i is initialized to zero, and then in step S14, it is determined whether or not an open-circuit voltage V1[i] of the cell with the cell number i exceeds the primary equalization target voltage Vd0'. If the answer is yes, the flow proceeds to step S15, and the switch of the discharge circuit connected to the cell is turned on to start discharging, and thereafter in step S16, the cell number i is counted up by one. Next in step S17, it is determined whether or not the cell number i matches the number N of cells forming the assembled battery. If the answer is NO, the flow returns to step S14, and the above described procedure is repeated. In repetition of the procedure, if the open-circuit voltage V1[i] of the cell is lower than or equal to the primary equalization target voltage Vd0' and thus the answer is NO in step S14, the flow proceeds to step S16, skipping step S15.

Thereafter, when it has been determined whether or not the open-circuit voltage V1[i] exceeds the primary equalization target voltage Vd0' for all cells forming the assembled battery, and discharge by the discharge circuit of all cells to be discharged whose open-circuit voltage V1[i] exceeds the equalization target voltage Vd0 is started, it is determined YES in step S17. And then, the flow proceeds to step S18 to reset the built-in timer and start counting operation. Subsequently in step S19, at the time when a certain time period (around two hours) has elapsed after the counting operation is started, the discharge is ended by turning off the switches of all the discharge circuits connected to all the cells to be discharged and the open-circuit voltages V1[0] to V1[N-1] of the plurality of cells forming the assembled battery are measured. Subsequently in step S20, the voltage lowering speed during no discharge Ds0 and the voltage lowering speed during discharge Ds1 are calculated. Also, the lowest voltage Vmin is identified from a plurality of open-circuit voltages measured in step S19 and a secondary equalization target voltage Vd0(=Vmin+α) is calculated. Here, calculation method of the secondary equalization target voltage is the same as that of the equalization target voltage of the first embodiment.

In a calculation process of the voltage lowering speed during no discharge Ds0 in step S20, for the cells not to be discharged which are not discharged for the certain time period among the plurality of cells forming the assembled battery, calculated are differences between the open-circuit voltages measured in step S11 before starting discharge and the respective open-circuit voltages measured in step S19 when the discharge ends. Thereafter, an average value of the differences is calculated, and the calculated average value is divided by the certain time period, thereby obtained is the voltage lowering speed during no discharge Ds0.

Also, in a calculation process of the voltage lowering speed during discharge Ds1, for the cells to be discharged which are discharged for the certain time period, calculated are differences between the open-circuit voltages measured in step S11 before starting discharge and the respective open-circuit voltages measured in step S19 when the discharge ends. Thereafter, an average value of the differences is calculated, and the calculated average value is divided by the certain time period, thereby obtained is the voltage lowering speed during discharge Ds1.

Further, in a calculation process of the voltage lowering speed during no discharge, it is also possible that for the plurality of cells not to be discharged, the differences between the open-circuit voltages before starting discharge for the certain time period and the respective open-circuit voltages when the discharge ends are divided by the certain time period, and an average value of the division results is calculated as the voltage lowering speed during no discharge Ds0. Also, in a calculation process of the voltage lowering speed during discharge, it is also possible that for the plurality of cells to be discharged, the differences between the open-circuit voltages before starting discharge for the certain time period and the respective open-circuit voltages when the discharge ends are divided by the certain time period and an average value of the division results is calculated as the voltage lowering speed during discharge Ds1.

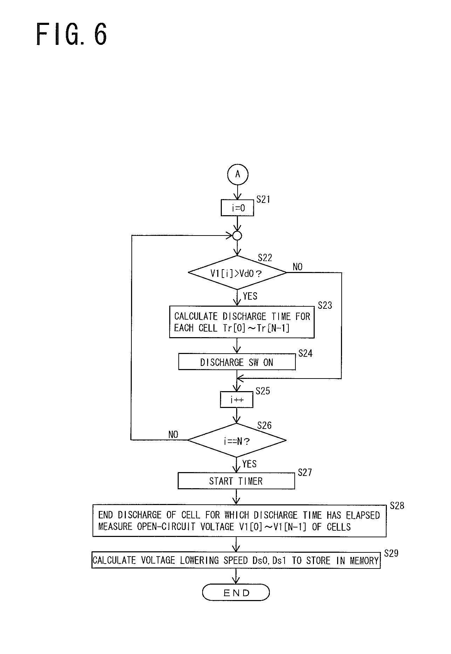

Thereafter in step S21 of FIG. 6, the cell number i is initialized to zero, and then in step S22, it is determined whether or not the open-circuit voltage V1[i] of the cell with the cell number i measured in step S19 exceeds the secondary equalization target voltage Vd0 calculated in step S20. If the answer is yes, the flow proceeds to step S23, and a discharge time Tr[i] for the cell is calculated from the open-circuit voltage V1[i] of the cell, the lowest voltage Vmin identified in step S20, the voltage lowering speed during no discharge Ds0 and the voltage lowering speed during discharge Ds1 calculated in step S20 using the aforementioned numerical formula 5.

Subsequently in step S24, the switch of the discharge circuit connected to the cell is turned on to start discharging, and thereafter in step S25, the cell number i is counted up by one. Next in step S26, it is determined whether or not the cell number i matches the number N of cells forming the assembled battery. If the answer is N0, the flow returns to step S22, and the above described procedure is repeated. In repetition of the procedure, if the open-circuit voltage V1[i] of the cell is lower than or equal to the secondary equalization target voltage Vd0 and thus the answer is N0 in step S22, the flow proceeds to step S25, skipping steps S23 and S24.

Thereafter, when it has been determined whether or not the open-circuit voltage V1[i] exceeds the secondary equalization target voltage Vd0 for all cells forming the assembled battery, and the discharge time is calculated for all cells to be discharged whose open-circuit voltage V1[i] exceeds the secondary equalization target voltage Vd0 and discharge by the discharge circuit is started, it is determined YES in step S26. And then, the flow proceeds to step S27 to reset the built-in timer and start counting operation. Subsequently in step S28, discharge of each of the cells to be discharged which has been started by the discharge circuit is stopped by turning off the switch of the discharge circuit at the time point when the discharge time calculated in step S23 has elapsed, and the open-circuit voltages V1[0] to V1[N-1] of the plurality of cells forming the assembled battery are measured at each time point. After the discharge circuit starts discharging, when the longest discharge time calculated in step S23 has elapsed, the above described equalization process ends, and then the flow proceeds to step S29 and the voltage lowering speed during no discharge Ds0 and the voltage lowering speed during discharge Ds1 are calculated and stored in the built-in memory to end the procedure.

In a calculation process of the voltage lowering speed during no discharge Ds0 in step S29, for the cells not to be discharged which are not discharged by the discharge circuit in the equalization process, calculated are differences between the open-circuit voltages measured in step S19 before starting equalization process and the respective open-circuit voltages measured in step S28 when the equalization process ends. Thereafter, an average value of the differences is calculated, and the calculated average value is divided by a time period from start to end of the equalization process, i.e. the longest discharge time calculated in step S23, thereby obtained is the voltage lowering speed during no discharge Ds0.

It is also possible that for the plurality of cells not to be discharged, the differences between the open-circuit voltages before starting equalization process and the open-circuit voltages when the equalization process ends are divided by the time period from start to end of the equalization process and an average value of the division results is calculated as the voltage lowering speed during no discharge Ds0.

An open-circuit voltage Vend at the end of the equalization process can also be calculated from the lowest voltage Vmin identified in step S20, the calculated voltage lowering speed during no discharge Ds0, and the longest discharge time Tr[i] calculated in step S23 using a following numerical formula 6.

$$(numerical\ formula\ 6)$$

$$Vend = Vmin - Ds0 \cdot Tr[i]$$

In contrast, in a calculation process of the voltage lowering speed during discharge Ds1 in step S29, for the cells to be discharged which are discharged by the discharge circuit in the equalization process, calculated are differences between the open-circuit voltages measured in step S19 before starting the equalization process and the respective open-circuit voltages measured in step S28 when the discharge time has elapsed and the discharge by the discharge circuit ends. And then the calculated differences are divided by respective discharge times and an average value of the division results is calculated as the voltage lowering speed during discharge Ds1.

Also, the open-circuit voltage Vend[i] of the cell to be discharged i at the time when the discharge by the discharge circuit ends can also be calculated from the open-circuit voltage V1[i] measured in step S19, the voltage lowering speed during discharge DS1 calculated in step S20, and the discharge time Tr[i] calculated in step S23 using a following numerical formula 7.

$$(numerical\ formula\ 7)$$

$$Vend[i] = V1[i] - Ds1 \cdot Tr[i]$$

In the procedure described above, when the ignition switch is turned off for the first time, cells to be discharged having voltage exceeding the primary equalization target voltage Vd0' are discharged for a certain time period, and the voltage lowering speed during no discharge Ds0 and the voltage lowering speed during discharge Ds1 are calculated from the open-circuit voltage before starting the discharge for the certain time period, the open-circuit voltage at the time when the discharge for the certain time period ends, and the certain time period. Thereafter the discharge time for the cells to be discharged having a voltage exceeding the secondary equalization target voltage Vd0 is calculated using the voltage lowering speeds Ds0, DS1 and equalization process is performed by discharging the cells to be discharged for the calculated discharge time. Finally, the voltage lowering speed during no discharge Ds0 is calculated from the open-circuit voltage before starting the equalization process, the open-circuit voltage at the time when the equalization process ends, and equalization process time it takes for the equalization process, and also, the voltage lowering speed during discharge Ds1 is calculated from the open-circuit voltage before starting the equalization process, the open-circuit voltage at the time when the discharge by the discharge circuit ends in the equalization process, and each calculated discharge time. The calculated voltage lowering speeds Ds0 Ds1 are stored in the built-in memory of the control circuit.

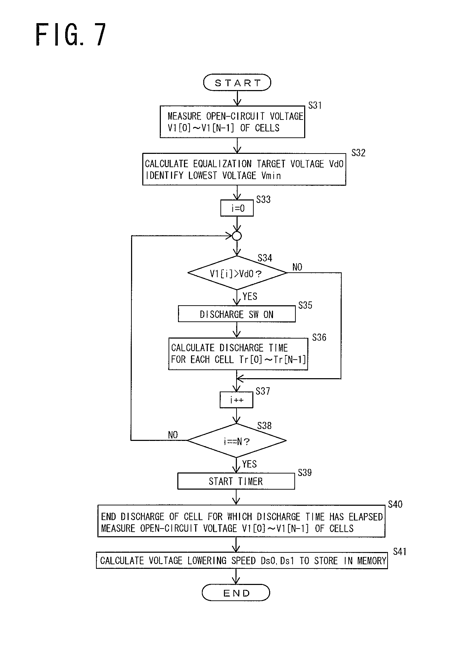

FIG. 7 shows an equalization process procedure performed by a control circuit of this embodiment when the ignition switch is turned off second and subsequent times. First in step S31, open-circuit voltages V1[0] to V1[N-1] of a plurality of (N) cells forming an assembled battery are measured. Subsequently in step S32, the lowest voltage Vmin is identified from a plurality of open-circuit voltages obtained as a result of measurement and an equalization target voltage Vd0(=Vmin+α) is calculated. Here, calculation method of the primary equalization target voltage is the same as that of the equalization target voltage of the first embodiment.

Subsequently in step S33, the cell number i is initialized to zero, and then in step S34, it is determined whether or not an open-circuit voltage V1[i] of the cell with the cell number i exceeds the equalization target voltage Vd0. If the answer is yes, the flow proceeds to step S35, and the switch of the discharge circuit connected to the cell is turned on to start discharging.

Next in step S36, a discharge time Tr[i] for the cell is calculated from the open-circuit voltage V1[i] of the cell, the lowest voltage Vmin identified in step S32, and the voltage lowering speed during no discharge Ds0 and the voltage lowering speed during discharge Ds1 stored in the built-in memory using the aforementioned numerical formula 5. Thereafter in step S37, the cell number i is counted up by one. Next in step S38, it is determined whether or not the cell number i matches the number N of cells forming the assembled battery. If the answer is NO, the flow returns to step S34, and the above described procedure is repeated. In repetition of the procedure, if the open-circuit voltage V1[i] of the cell is lower than or equal to the equalization target voltage Vd0 and thus the answer is NO in step S34, the flow proceeds to step S37, skipping steps S35 and S36.

Thereafter, when it has been determined whether or not the open-circuit voltage V1[i] exceeds the equalization target voltage Vd0 for all cells forming the assembled battery, discharge by the discharge circuit is started and the discharge time is calculated for all cells to be discharged whose open-circuit voltage V1[i] exceeds the equalization target voltage Vd0, it is determined YES in step S38. And then, the flow proceeds to step S39 to reset the built-in timer and start counting operation. Subsequently in step S40, discharge of each of the cells to be discharged which has been started by the discharge circuit is stopped by turning off the switch of the discharge circuit at the time point when each of the discharge times calculated in step S36 has elapsed, and the open-circuit voltages V1[0] to V1[N-1] of the plurality of cells forming the assembled battery are measured at each time point. After the discharge circuit starts discharging, when the longest discharge time calculated in step S36 has elapsed, the above described equalization process ends, and then, the flow proceeds to step S41 and the voltage lowering speed during no discharge Ds0 and the voltage lowering speed during discharge Ds1 are calculated and overwritten in a voltage lowering speed storing area of the built-in memory to end the procedure. The voltage lowering speed during no discharge and the voltage lowering speed during discharge which are stored in the built-in memory at the time are thereby updated to the calculated voltage lowering speed during no discharge and the voltage lowering speed during discharge. Here, calculation methods of the voltage lowering speed during no discharge Ds0 and the voltage lowering speed during discharge Ds0 are the same as those in step S29.

In the procedure described above, when the ignition switch is turned off second and subsequent times, the discharge time for each cell to be discharged having a voltage exceeding the equalization target voltage Vd0 is calculated using the voltage lowering speed during no discharge Ds0 and the voltage lowering speed during discharge Ds1 which are stored in the built-in memory, and equalization process is performed by discharging each cell to be discharged for the calculated discharge time. Finally, the voltage lowering speed during no discharge Ds0 is calculated from the open-circuit voltage before starting the equalization process, the open-circuit voltage at the time when the equalization process ends, and equalization process time it takes for the equalization process, and also, the voltage lowering speed during discharge Ds1 is calculated from the open-circuit voltage before starting the equalization process, the open-circuit voltage at the time when the discharge by the discharge circuit ends in the equalization process, and each calculated discharge time. The voltage lowering speed during no discharge and the voltage lowering speed during discharge which are stored in the built-in memory at the time are thereby updated to the calculated voltage lowering speed during no discharge and voltage lowering speed during discharge.

In the battery system of this embodiment, when the ignition switch is turned off for the first time, the voltage lowering speed during no discharge Ds0 and the voltage lowering speed during discharge Ds1 are automatically calculated, thereby eliminating the need for the troublesome work for obtaining these voltage lowering speeds by experiment.

Also, because the voltage lowering speed during no discharge Ds0 and the voltage lowering speed during discharge Ds1 are updated every time equalization process ends and the discharge time for a cell to be discharged is calculated always using values close to the actual voltage lowering speed during no discharge and voltage lowering speed during discharge, the equalization process can be always performed with high accuracy.

The present invention is not limited to the foregoing embodiment in construction but can be modified variously within the technical scope as set forth in the appended claims.

For example, although the discharge time is calculated for each cell to be discharged and discharge by the discharge circuit ends when the calculated discharge time has elapsed in the foregoing embodiment, it is also possible to employ a structure in which calculated is a discharge end voltage at which a voltage at both ends of a cell to be discharged becomes equal to that of a cell not to be discharged, so that the discharge by the discharge circuit ends when the voltage at both ends of a cell to be discharged reaches the calculated discharge end voltage. It is also possible to employ a structure in which the discharge by the discharge circuit is controlled based on the discharge time and the discharge end voltage. With the structure in which the end of the discharge is controlled based on the discharge end voltage, because the discharge ends while observing cell voltage which changes in accordance with state of charge, when equalizing an assembled battery comprising cells whose voltage at both ends greatly changes with respect to the change in state of charge, obtained is higher accuracy than a structure in which the end of the discharge is controlled based on the discharge time. In contrast, with the structure in which the end of the discharge is controlled based on the discharge time, when equalizing an assembled battery comprising cells whose voltage at both ends changes a little with respect to the change in state of charge, obtained is sufficiently-high accuracy.

Also, although the discharge time is calculated based on a voltage at both ends of a cell to be discharged, a voltage at both ends of a cell not to be discharged, and the voltage lowering speeds Ds0, Ds1 in the foregoing embodiment, it is also possible to employ, as the state of charge evaluation value, state of charge (SOC[%] or remaining capacity[Ah]) or another value in accordance with state of charge such as an integrated value of electric current flowing through a cell. In a structure in which an integrated value of electric current flowing through a cell is employed as the state of charge evaluation value, in a case where a direction in which electric current flows at the time of discharge is a positive direction, the state of charge evaluation value changing speed represents a speed with which the integrated value of electric current increases.

It is also possible to employ a structure in which the discharge time or the discharge end voltage is derived in accordance with a table showing relation of an open-circuit voltage of a cell to be discharged and an open-circuit voltage of a cell not to be discharged and the discharge time or the discharge end voltage.

Also, although a method for calculating the equalization target voltage based on the lowest open-circuit voltage among open-circuit voltages of a plurality of cells forming the assembled battery is employed as a method for calculating the equalization target voltage in the foregoing embodiment, it is also possible to employ various known methods such as a method for calculating the equalization target voltage based on an average value of these open-circuit voltages, as well as the aforementioned method.

It is also possible to employ a structure in which, every time the ignition switch is turned off, a part of the cells forming the assembled battery is discharged for a certain time period to calculate the voltage lowering speeds Ds0, Ds1 before performing the equalization process.

Also, because the state of charge evaluation value changing speed during discharge and state of charge evaluation value changing speed during no discharge could vary from a cell to another, it is possible to employ a structure in which the state of charge evaluation value changing speed during discharge and state of charge evaluation value changing speed during no discharge are calculated for each cell.

Further, it is possible to store the voltage lowering speed during discharge and the voltage lowering speed during no discharge in the memory for each SOC range, and calculate the discharge time using the voltage lowering speed during discharge and the voltage lowering speed during no discharge in accordance with the SOC at the time.

Furthermore, it is possible to weight the voltage lowering speed during discharge and voltage lowering speed during no discharge calculated after the equalization process, and the voltage lowering speed during discharge and voltage lowering speed during no discharge calculated after the previous equalization process (the voltage lowering speed during discharge and voltage lowering speed during no discharge stored in the memory), and calculate an average value of each of the weighted voltage lowering speeds to update the voltage lowering speed during discharge and voltage lowering speed during no discharge stored in the memory to the respective calculated average values.

## Claims

1. A state of charge equalizing device which equalizes state of charge of a plurality of cells connected in series that form an assembled battery by discharging a cell having a state of charge evaluation value different from an equalization target value, the state of charge evaluation value representing state of charge or a value corresponding to the state of charge, the device comprising:

   discharging means that performs discharge of each of the cells;
   equalization target value calculating means that calculates the equalization target value;
   discharge control value deriving means that derives a discharge time for which the discharge by the discharging means should be performed or a discharge end value at which the discharge by the discharging means should be ended for each of one or a plurality of cells to be discharged having the state of charge evaluation value different from the equalization target value calculated by the equalization target value calculating means; and

equalization processing means that performs an equalization process of starting the discharge by the discharging means for the one or plurality of cells to be discharged, and thereafter ending the discharge by the discharging means for each cell to be discharged when the discharge time derived by the discharge control value deriving means has elapsed or when the state of charge evaluation value reaches the discharge end value derived by the discharge control value deriving means,

wherein the discharge control value deriving means derives the discharge time or the discharge end value with which the state of charge of the cell to be discharged becomes equal to the state of charge of a cell not to be discharged, based on: the state of charge evaluation value of the cell to be discharged and the state of charge evaluation value of the cell not to be discharged before the discharge by the discharging means is started; a state of charge evaluation value changing speed during discharge which represents a speed of change in the state of charge evaluation value of a cell when the discharge by the discharging means is performed; and a state of charge evaluation value changing speed during no discharge which represents a speed of change in the state of charge evaluation value of a cell when the discharge by the discharging means is not performed.

2. The state of charge equalizing device according to claim 1, wherein the state of charge evaluation value is a voltage at both ends of a cell, the device further comprises voltage measuring means that measures the voltage at both ends of each of the cells that form the assembled battery, the discharge control value deriving means derives the discharge time or the discharge end value based on: the voltage at both ends of the cell to be discharged and the voltage at both ends of the cell not to be discharged which are measured by the voltage measuring means before the discharge by the discharging means is started; a voltage lowering speed during discharge representing a lowering speed of the voltage at both ends of a cell when the discharge by the discharging means is performed; and a voltage lowering speed during no discharge representing a lowering speed of the voltage at both ends of a cell when the discharge by the discharging means is not performed.

**3.** The state of charge equalizing device according to claim 2, wherein the equalization target value calculating means calculates the equalization target value based on the lowest voltage among the voltage at both ends of the plurality of cells that forms the assembled battery.

**4.** The state of charge equalizing device according to claim 2 or 3, wherein in the discharge control value deriving means, a function formula is set as a numerical formula 8:

$$\text{(numerical formula 8)}$$

$$Tr=(V0-V1)/(Ds0-Ds1)$$

where a voltage at both ends of a cell to be discharged before the discharge by the discharging means is started is V1, a voltage at both ends of a cell not to be discharged is V0, a voltage lowering speed during discharge is Ds1, a voltage lowering speed during no discharge is Ds0, and a discharge time for the cell to be discharged is Tr.

**5.** The state of charge equalizing device according to claim 4, wherein the voltage lowering speed during discharge Ds1 and the voltage lowering speed during no discharge Ds0 are set as invariables, or a result of subtraction of the voltage lowering speed during discharge Ds1 from the voltage lowering speed during no discharge Ds0 is set as an invariable.

**6.** The state of charge equalizing device according to any one of claims 1 to 4, including:

discharge control means that performs the discharge by the discharging means for a certain time period for one or a plurality of cells which are a part of the plurality of cells that form the assembled battery; and
state of charge evaluation value changing speed calculating means that calculates, after the discharge for the certain time period ends, the state of charge evaluation value changing speed during discharge based on state of charge evaluation values before start of the discharge and at the end of the discharge of the one or plurality of cells to be discharged for which the discharge is performed and the certain time period, and the state of charge evaluation value changing speed during no discharge based on state of charge evaluation values before start of the discharge and at the end of the discharge of one or a plurality of cells not to be discharged for which the discharge for a certain time period is not performed and the certain time period,

wherein the discharge control value deriving means derives the discharge time or the discharge end value for a subsequent equalization process using the state of charge evaluation value changing speed during discharge and the state of charge evaluation value changing speed during no discharge calculated by the state of charge evaluation value changing speed calculating means.

**7.** The state of charge equalizing device according to any one of claims 1 to 4 and 6, including:

state of charge evaluation value changing speed storing means that stores the state of charge evaluation value changing speed during discharge and the state of charge evaluation value changing speed during no discharge;
second state of charge evaluation value changing speed calculating means that calculates, after the equalization process ends, the state of charge evaluation value changing speed during discharge based on state of charge evaluation values before start of the equalization process and at the end of the discharge by the discharging means of the one or plurality of cells to be discharged for which the discharge by the discharging means is performed in the equalization process and the discharge time derived by the discharge control value deriving means, and state of charge evaluation value changing speed during no discharge based on state of charge evaluation values before start of the equalization process and at the end of the equalization process of the one or plurality of cells not to be discharged for which the discharge by the discharging means is not performed in the equalization process and a time from the start to the end of the equalization process; and
updating means that updates the state of charge evaluation value changing speed during discharge and the state of charge evaluation value changing speed during no discharge which are stored in the state of charge evaluation value changing speed storing means to the state of charge evaluation value changing speed during discharge and the state of charge evaluation value changing speed during no discharge calculated by the second state of charge evaluation value changing speed calculating means, respectively,
wherein the discharge control value deriving means derives the discharge time for a subsequent equalization process using the updated state of charge evaluation value changing speed during discharge and state of charge evaluation value changing speed during no discharge.

**8.** An assembled battery system comprising an assembled battery that includes a plurality of cells connected in series and the state of charge equalizing device according to any one of claims 1 to 7.

FIG. 1

# FIG. 2

START

MEASURE OPEN-CIRCUIT VOLTAGE V1[0]~V1[N-1] OF CELLS — S1

CALCULATE EQUALIZATION TARGET VOLTAGE Vd0 IDENTIFY LOWEST VOLTAGE Vmin — S2

i=0 — S3

S4 V1[i]>Vd0?
NO
YES

CALCULATE DISCHARGE TIME FOR EACH CELL Tr[0]~Tr[N-1] — S5

DISCHARGE SW ON — S6

i++ — S7

S8 i==N?
NO
YES

START TIMER — S9

END DISCHARGE OF CELL FOR WHICH DISCHARGE TIME HAS ELAPSED — S10

END

# FIG. 3

VOLTAGE (V)

V1

Vd0
V0 →
Vr

Li

Lθ

P

START EQUALIZATION          Tr          TIME (t)

# FIG. 4

VOLTAGE (V) Vm

Vn

Vd0
Vmin →
Vr[n]
Vr[m]

Lm

Ln

Lθ

0          Tr[n]          Tr[m]          TIME (t)
START EQUALIZATION   END DISCHARGING Ln   END DISCHARGING Lm
                                          (END EQUALIZATION)

17

# FIG. 5

```
                    ┌─────────────┐
                    │    START    │
                    └─────────────┘
                           │
                           ▼              S11
              ┌──────────────────────────┐
              │ MEASURE OPEN-CIRCUIT VOLTAGE │
              │ V1[0]~V1[N-1] OF CELLS    │
              └──────────────────────────┘
                           │
                           ▼                            S12
        ┌──────────────────────────────────────────────┐
        │ CALCULATE PRIMARY EQUALIZATION TARGET VOLTAGE Vd0´ │
        └──────────────────────────────────────────────┘
                           │
                           ▼    S13
                      ┌────────┐
                      │  i=0   │
                      └────────┘
                           │
              ┌───────────►○
              │            │
              │            ▼       S14
              │        ╱───────╲        NO
              │      ╱  V1[i]>Vd0´ ? ╲──────────┐
              │      ╲             ╱            │
              │        ╲───────╱               │
              │            │ YES               │
              │            ▼          S15       │
              │    ┌──────────────────┐        │
              │    │  DISCHARGE SW ON │        │
              │    └──────────────────┘        │
              │            │                    │
              │            ▼◄──────────────────┘
              │            │       S16
              │        ┌────────┐
              │        │  i++   │
              │        └────────┘
              │            │
              │            ▼       S17
              │  NO    ╱───────╲
              └───────╲  i==N? ╱
                       ╲     ╱
                        ╲───╱
                          │ YES
                          ▼          S18
                  ┌──────────────────┐
                  │   START TIMER    │
                  └──────────────────┘
                          │
                          ▼                            S19
        ┌──────────────────────────────────────────────┐
        │ END DISCHARGE AFTER CERTAIN TIME PERIOD       │
        │ MEASURE OPEN-CIRCUIT VOLTAGE V1[0]~V1[N-1] OF CELLS │
        └──────────────────────────────────────────────┘
                          │
                          ▼                            S20
        ┌──────────────────────────────────────────────┐
        │ CALCULATE VOLTAGE LOWERING SPEED Ds0,Ds1      │
        │ CALCULATE SECONDARY EQUALIZATION TARGET VOLTAGE Vd0 │
        │ IDENTIFY LOWEST VOLTAGE Vmin                  │
        └──────────────────────────────────────────────┘
                          │
                          ▼
                        ┌───┐
                        │ A │
                        └───┘
```

# FIG. 6

A

S21
i=0

S22
V1[i]>Vd0 ?  — NO

YES

S23
CALCULATE DISCHARGE TIME FOR
EACH CELL Tr[0]~Tr[N-1]

S24
DISCHARGE SW ON

S25
i++

S26
i==N ?  — NO

YES

S27
START TIMER

S28
END DISCHARGE OF CELL FOR WHICH DISCHARGE TIME HAS ELAPSED
MEASURE OPEN-CIRCUIT VOLTAGE V1[0]~V1[N-1] OF CELLS

S29
CALCULATE VOLTAGE LOWERING SPEED Ds0,Ds1 TO STORE IN MEMORY

END

FIG. 7

```
                    ( START )
                        │
                        ▼
            ┌───────────────────────────┐  S31
            │ MEASURE OPEN-CIRCUIT VOLTAGE│
            │ V1[0]~V1[N-1] OF CELLS      │
            └───────────────────────────┘
                        │
                        ▼
        ┌───────────────────────────────────┐  S32
        │ CALCULATE EQUALIZATION TARGET VOLTAGE Vd0│
        │ IDENTIFY LOWEST VOLTAGE Vmin        │
        └───────────────────────────────────┘
                        │
                        ▼
                    ┌──────┐  S33
                    │ i=0  │
                    └──────┘
                        │
                        ▼
                      ( ○ )◄──────────────┐
                        │                 │
                        ▼  S34            │
                   ╱─────────╲    NO      │
                  ╱ V1[i]>Vd0? ╲──────────┤
                   ╲─────────╱            │
                        │ YES             │
                        ▼                 │
                ┌───────────────┐  S35    │
                │ DISCHARGE SW ON│        │
                └───────────────┘         │
                        │                 │
                        ▼  S36            │
            ┌───────────────────────┐     │
            │ CALCULATE DISCHARGE TIME│    │
            │ FOR EACH CELL Tr[0]~Tr[N-1]│ │
            └───────────────────────┘     │
                        │◄────────────────┘
                        ▼  S37
                    ┌──────┐
                    │ i++  │
                    └──────┘
                        │
              NO        ▼  S38
         ┌────────╱─────────╲
         │        ╲  i==N ?  ╱
         │         ╲────────╱
         │             │ YES
         │             ▼  S39
         │     ┌───────────────┐
         │     │  START TIMER  │
         │     └───────────────┘
         │             │
         │             ▼  S40
  ┌──────────────────────────────────────────────────┐
  │ END DISCHARGE OF CELL FOR WHICH DISCHARGE TIME HAS ELAPSED│
  │ MEASURE OPEN-CIRCUIT VOLTAGE V1[0]~V1[N-1] OF CELLS│
  └──────────────────────────────────────────────────┘
                        │  S41
                        ▼
  ┌──────────────────────────────────────────────────┐
  │ CALCULATE VOLTAGE LOWERING SPEED Ds0,Ds1 TO STORE IN MEMORY│
  └──────────────────────────────────────────────────┘
                        │
                        ▼
                    ( END )
```

FIG. 8

# FIG. 9

## INTERNATIONAL SEARCH REPORT

| International application No. |
| --- |
| PCT/JP2009/054528 |

A. CLASSIFICATION OF SUBJECT MATTER
*H02J7/02*(2006.01)i, *B60L3/00*(2006.01)i, *H01M10/44*(2006.01)i, *H01M10/48*(2006.01)i

According to International Patent Classification (IPC) or to both national classification and IPC

B. FIELDS SEARCHED

Minimum documentation searched (classification system followed by classification symbols)
H02J7/02, B60L3/00, H01M10/44, H01M10/48

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2007-244142 A  (Hitachi Vehicle Energy, Ltd.),<br>20 September, 2007 (20.09.07),<br>Par. Nos. [0008], [0030] to [0037]; Figs. 1 to 3<br>(Family: none) | 1-5,8<br>6,7 |
| Y<br>A | JP 2007-143373 A  (Toyota Motor Corp.),<br>07 June, 2007 (07.06.07),<br>Par. Nos. [0075] to [0104]; Figs. 5 to 8<br>(Family: none) | 1-5,8<br>6,7 |
| A | JP 2003-282159 A  (Shin-Kobe Electric Machinery Co., Ltd.),<br>03 October, 2003 (03.10.03),<br>Par. Nos. [0001] to [0005]; Fig. 5<br>(Family: none) | 1-8 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>21 May, 2009 (21.05.09) | Date of mailing of the international search report<br>02 June, 2009 (02.06.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001218376 A
- JP 2001231178 A
- JP 2006166615 A